# EUROPÄISCHE PATENTSCHRIFT

(11) **EP 2 248 614 B1**
(45) Veröffentlichungstag und Bekanntmachung des Hinweises auf die Patenterteilung: **16.11.2011**
(21) Anmeldenummer: 09005986.6
(22) Anmeldetag: 30.04.2009
(51) Int. Cl.: B22C 9/02, B22C 9/22, B22C 9/24, B22C 13/08, B22C 1/08

(54) **Dispersion, Schlicker und Verfahren zur Herstellung einer Gießform für den Präzisionsguss unter Verwendung des Schlickers**
Dispersion, slip and method for producing a casting mould for precision casting using the slip
Dispersion, barbotine et procédé de fabrication d'un moule pour la coulée de précision en utilisant la barbotine

(43) Veröffentlichungstag der Anmeldung: 10.11.2010
(73) Patentinhaber: Evonik Degussa GmbH, 45128 Essen (DE); Center for Abrasives and Refractories Research & Development C.A.R.R.D. GmbH, 9524 Villach (AT)
(72) Erfinder: Tontrup, Christoph, 63755 Alzenau (DE); Lortz, Wolfgang, 63607 Wächtersbach (DE); Perlet, Gabriele, 63538 Grosskrotzenburg (DE); Schmidt-Kluge, Erich, 9523 Villach (AT); Frulli, Danilo, 95880 Enghien Les Bains (FR)

(56) Entgegenhaltungen:
- EP-B1- 0 462 176
- DE-A1- 2 909 844
- US-A- 3 933 190
- US-A- 4 188 450
- US-A- 4 247 333
- US-A- 5 297 615
- US-A1- 2008 264 299
- STOROZHENKO P A ET AL: "Chelated alkoxyalumoxanes and a silica-free binder based on them" INORGANIC MATERIALS MAIK NAUKA RUSSIA LNKD- DOI:10.1134/S002016850703020X, Bd. 43, Nr. 3, März 2007 (2007-03), Seiten 320-328, XP002581852 ISSN: 0020-1685 DOI: 10.1134/S002016850703020X
- JIA Q ET AL: "A study of two refractories as mould materials for investment casting TiAl based alloys" JOURNAL OF MATERIALS SCIENCE, KLUWER ACADEMIC PUBLISHERS, BO LNKD- DOI:10.1007/S10853-006-6785-3, Bd. 41, Nr. 10, 28. März 2006 (2006-03-28) , Seiten 3045-3049, XP019399529 ISSN: 1573-4803 DOI: 10.1007/s10853-006-6785-3
- BOCCACCINI A R ET AL: "Mullite fabrication from fumed silica and boehmite sol precursors" MATERIALS LETTERS, NORTH HOLLAND PUBLISHING COMPANY. AMSTERDAM, NL LNKD- DOI:10.1016/S0167-577X(96)00144-9, Bd. 29, Nr. 1-3, 1. November 1996 (1996-11-01), Seiten 171-176, XP004065591 ISSN: 0167-577X DOI: 10.1016/S0167-577X(96)00144-9
- BOCCACCINI A R ET AL: "Activation energy for the mullitization of a diphasic gel obtained from fumed silica and boehmite sol" MATERIALS LETTERS, NORTH HOLLAND PUBLISHING COMPANY. AMSTERDAM, NL LNKD- DOI:10.1016/S0167-577X(98)00143-8, Bd. 38, Nr. 2, 1. Januar 1999 (1999-01-01) , Seiten 116-120, XP004256068 ISSN: 0167-577X DOI: 10.1016/S0167-577X(98)00143-8

## Beschreibung

Die vorliegende Erfindung betrifft eine Dispersion, einen Schlicker, ein Verfahren zur Herstellung einer Gießform für den Präzisionsguss sowie eine nach dem diesem Verfahren erhältliche Gießform.

Eine Form des Präzisionsgusses für Metalle ist das sogenannte "Investment Casting" oder auch Wachsausschmelzverfahren. Dabei wird das später herzustellende Werkstück zunächst aus Wachs oder anderen leicht zu formenden und schmelzenden Materialien, wie zum Beispiel Kunststoffen oder Harnstoff, modelliert. Das Modell wird dann mit Einguss- oder Entlüftungskanälen versehen und anschließend mit dem sogenannten Formstoff ummantelt. Die dabei entstehende Grünform wird ausgeschmolzen und es entsteht ein Formhohlraum, der anschließend gegebenenfalls gebrannt werden kann. In diesen Formhohlraum wird geschmolzenes Metall gegossen, welches in der Gießform erstarrt, so dass man nach dem Entfernen der Gießform das rohe Gussteil entnehmen kann.

Beim Entnehmen wird die Gießform zerschlagen und das rohe Gussteil wird anschließend noch fertig bearbeitet. Diese Gusstechnik wird vor allem da eingesetzt, wo hohe Anforderungen an die Präzision des Werkstücks gestellt werden, hohe Stückzahlen gefordert sind und komplizierte Formen hergestellt werden sollen.

Zur Herstellung der Gießform benötigt man das aus Wachs oder Kunststoff modellierte Positiv des Gussteils, einen Schlicker, der aus einem Binder, Feuerfestpartikeln und gegebenenfalls Additiven besteht, sowie grobe Feuerfestpartikel zum Besanden, sogenanntes "stucco", mit denen die mit Schlicker benetzte Wachsform beschichtet wird.

Je nach Art des Metallgusses werden unterschiedliche Anforderungen an die Gießform gestellt. So werden insbesondere für das Gießen von Superlegierungen oder für den Einkristallguss keramische Gießformen eingesetzt, die eine hohe Feuerfestigkeit und Temperaturbeständigkeit aufweisen müssen.

In diversen Veröffentlichungen werden zahlreiche Gießformzusammensetzungen beschrieben, die für Hochtemperatur-Investment-Casting-Prozesse geeignet sind. So wird in der US 4,188,450 eine Feuerfestzusammensetzung beschrieben für eine Gießform, die im Wesentlichen aus Aluminiumoxid und einem Binder auf Siliciumdioxidbasis besteht, wobei bei der Herstellung der Gießform während eines Sinterschrittes oberhalb von 1400°C Mullit gebildet wird. Ein Nachteil derartiger Gießformen besteht darin, dass Siliciumdioxid oder Mullit häufig mit den Legierungsbestandteilen reagiert und somit für viele Formgebungsprozesse nicht in Frage kommt oder aufwendige Oberflächenbehandlungen des Gussteils nach sich zieht.

In der US 4,247,333 wird ein Verfahren zur Herstellung von Gießformen beschrieben, wobei als Keramikpulver ebenfalls Aluminiumoxid eingesetzt und der Binder auf Basis von Siliciumdioxid beim Brennen der Gießform dadurch entfernt wird, dass unter reduzierenden Bedingungen gearbeitet wird. Auf diese Weise soll es gelingen, eine Gießform herzustellen, die vollständig aus Aluminiumoxid besteht. Ein Nachteil dieses Verfahrens besteht darin, dass es kosten- und zeitaufwändig ist.

In der DE 2 909 844 wird ein Verfahren zur Herstellung einer Gießform offenbart, bei dem als Bindemittel faserartiges kolloidales Aluminiumoxidsol eingesetzt wird. Nachteilig bei diesem Verfahren ist, das das Aluminiumoxidsol nur in einem engen sauren pH-Bereich von pH kleiner 5 ausreichend stabil gegen Gelierung ist. Die bei der Herstellung von Gießformen oft eingesetzten feuerfesten, alkalisch reagierenden Materialien führen mit saurem Aluminiumoxidsol zu einem instabilen Schlicker. Die Instabilität kann sich beispielsweise in einer vollständigen Gelierung des Schlickers zeigen. Ferner führt diese Instabilität zu einer nicht akzeptablen Qualität der Gießform, die sich beispielsweise in Inhomogenitäten und Rissen zeigt. Diese Probleme können, wenn überhaupt, nur dadurch verringert werden, dass der pH-Wert in kurzen Abständen gemessen wird und Säure nachdosiert wird. Eine solche Vorgehensweise hat sich in der Praxis nicht bewährt.

Aufgabe der vorliegenden Erfindung ist es somit einen Schlicker und ein Verfahren zur Herstellung einer Gießform für den Präzisionsguss bereitzustellen, die die Nachteile des Standes der Technik nicht aufweisen.
Aufgabe der vorliegenden Erfindung ist es weiterhin eine Dispersion zur Herstellung des Schlickers bereitzustellen. Weiterhin ist es eine Aufgabe der vorliegenden Erfindung eine nach diesem Verfahren hergestellte Gießform bereitzustellen.

Gegenstand der Erfindung ist ein Schlicker, der
a) 50 bis 80 Gew.-%, bevorzugt 60 bis 75 Gew.-%, Feuerfestpartikel mit einer mittleren Partikelgröße von 0,5 µm bis 150 µm, bevorzugt von 5 bis 40 µm,
b) 5 bis 35 Gew.-%, bevorzugt 10 bis 20 Gew.-%, Aluminiumoxidpartikeln mit einem mittleren Partikeldurchmesser von weniger 300 nm, bevorzugt 10 bis 200 nm und besonders bevorzugt 60 bis 120 nm,
c) 5 bis 35 Gew.-% Wasser, bevorzugt 10 bis 25 Gew.-%, enthält und
d) einen pH-Wert von 5 bis 12, bevorzugt 7,5 bis 11, aufweist.

Die Gewichtsprozente ergeben sich aus der Summe der Bestandteile aus a) bis c). Der Schlicker kann darüber hinaus noch weitere Bestandteile enthalten.

Bei dem erfindungsgemäßen Schlicker handelt es sich um einen Schlicker, der eine extrem hohe Stabilität bezüglich eines Viskositätsanstieges, des Absetzens der festen Schlickerbestandteile oder des Gelierens des Schlickers aufweist. Zur Stabilität des Schlickers trägt wahrscheinlich eine Kombination der Merkmale Partikeldurchmesser und pH-Wert entscheidend bei.
Die BET-Oberfläche der im erfindungsgemäßen Schlicker vorliegenden Aluminiumoxidpartikel mit einem mittleren Partikeldurchmesser von weniger 300 nm ist nicht kritisch. In der Regel beträgt die BET-Oberfläche 10 bis 200 m²/g, bevorzugt 50 bis 120 m²/g. Die Partikel können sowohl als isolierte Einzelpartikel wie auch als aggregierte Partikel vorliegen. Ebenso sind Mischformen daraus möglich.

Als Aluminiumoxidpartikel mit einem mittleren Partikeldurchmesser von weniger als 300 nm können beispielsweise Böhmite oder Pseudoböhmite eingesetzt werden. Die besten Ergebnisse bei der Verwendung des erfindungsgemäßen Schlickers zur Herstellung von Gießformen werden mit pyrogen hergestellten Aluminiumoxidpartikeln erhalten. Diese liegen dann vorwiegend oder ausschließlich in aggregierter Form vor. Unter Aggregaten sind fest miteinander verwachsene Primärpartikel zu verstehen. Diese Aggregate sind durch Dispergiervorrichtungen entweder nur schlecht oder gar nicht mehr zu zerteilen. Mehrere Aggregate können sich lose zu Agglomeraten zusammenfügen, wobei dieser Vorgang durch geeignete Dispergierung wieder rückgängig gemacht werden kann. Die Bestimmung des mittleren Aggregatdurchmessers kann mittels der dem Fachmann bekannten Methoden wie Lichtstreuung oder Ausmessen von Aggregatdurchmessern in TEM-Aufnahmen erfolgen.

Unter pyrogen ist zu verstehen, dass die Partikel mittels Flammenhydrolyse oder Flammenoxidation erhalten wurden. Dabei werden zunächst hochdisperse, nicht poröse Primärpartikel gebildet, die im weiteren Reaktionsverlauf zu Aggregaten zusammenwachsen. Die Oberflächen dieser Partikel können saure oder basische Zentren aufweisen.

Um die Stabilität des erfindungsgemäßen Schlickers weiter zu erhöhen, hat sich ein gepufferter pH-Wert als vorteilhaft erwiesen. Geeignet hierzu ist insbesondere ein Puffer, der ein oder mehrere mindestens zweibasische Carbonsäuren sowie mindestens ein Salz eines Dialkalihydrogenphosphats und/oder Alkalihydrogenphosphats umfasst. Der Anteil der Pufferbestandteile beträgt dabei bevorzugt, jeweils unabhängig voneinander, 0.3 bis 3 x 10⁻⁶ mol/m² spezifischer Aluminiumoxid-Oberfläche.

Weiterhin kann der erfindungsgemäße Schlicker ein oder mehrerer Additive enthalten. In der Regel beträgt deren Anteil maximal bis zu 10 Gew.-%, bezogen auf das Gesamtgewicht des Schlickers. Die Additive umfassen Antischaummittel, Benetzungshilfen, Polymere, beispielsweise in Form von Dispersionen, Polyphosphate, Organophosphonsäuren, metallorganische Verbindungen und antibakteriell wirkende Mittel. Der Anteil an Antischaummitteln, Benetzungshilfen, Polyphosphaten, Organophosphonsäuren, metallorganischen Verbindungen und antibakteriell wirkenden Mitteln kann bevorzugt jeweils 0,01 bis 5 Gew.-% und besonders bevorzugt 0,1 bis 1 Gew.-% betragen. Der Anteil an Polymer beträgt bevorzugt 1 bis 5 Gew.-%.

In einer besonders bevorzugten Ausführungsform enthält der erfindungsgemäße Schlicker ein oder mehrere Polyphosphate. Im Rahmen der vorliegenden Arbeiten wurde gefunden, dass insbesondere die Festigkeit der Gießform durch die Zugabe von Polyphosphaten als zusätzliche Additive gesteigert werden kann. Dieser Effekt ist möglicherweise darauf zurückzuführen, dass die Polyphosphate bei der Gießformherstellung zusammen mit den Aluminiumoxidpartikeln mit einem mittleren Partikeldurchmesser von weniger 300 nm dreidimensionale polymere Netzwerke ausbilden. In einer besonders vorteilhaften Ausgestaltung der vorliegenden Erfindung enthält der Schlicker 0,05 Gew.-% bis 2,0 Gew.-% Natriumtripolyphosphat.

Die gegebenenfalls eingesetzten Organophosphonsäuren weisen vorteilhafterweise wenigstens eine Amino- und/oder Hydroxygruppe auf. Beispielhaft seien HOCH₂-CH(OH)PO(OH)₂, (HO)₂OP-CH (OH)-PO(OH)₂, (HO)₂OP-CH₂-CH₂-CH(OH)PO(OH)₂ und/oder HO₂C-CR(OH)PO(OH)₂ mit R=Me, Et, Pr, Bu genannt. Geeignete Polymere können Neoprenpolymere, Urethanpolymere, Acryl-und Styrol-butadien Latexpolymere sein.

Die im erfindungsgemäßen Schlicker enthaltenen Feuerfestpartikel mit einer mittleren Partikelgröße von 0,5 µm bis 150 µm werden vorzugsweise aus der Gruppe bestehend aus Aluminiumoxid, Zirkonoxid, Mullit, Andalusit, Zirkonmullit, stabilisiertes Zirkonoxid, Yttriumoxid, Cobaltoxid, Cobaltaluminiumspinell und/oder Selten-Erd-Oxide ausgewählt. Besonders bevorzugt kann α-Aluminiumoxid, zum Beispiel in Form von Schmelzkorund, sein. Ganz besonders bevorzugt kann weißer Edelkorund mit einem auf den Veraschungsrückstand bezogenen Gehalt an Aluminiumoxid von höher als 99% oder brauner Normalkorund mit einem Gehalt an Aluminiumoxid von höher als 95% eingesetzt werden. Weiterhin kann aufgrund seines auf den Veraschungsrückstand bezogenen Gehalts an Siliciumdioxid von kleiner als 0,1% weißer Edelkorund für den Guss von bestimmten Metallen gegenüber dem braunen Korund bevorzugt sein. Beide Schmelzkorundtypen zeichnen sich durch das fast vollständige Fehlen von offener Porosität aus.

Ein besonderer Vorteil des erfindungsgemäßen Schlickers ist seine Stabilität bezüglich Viskosität, Gelierung, Sedimentation und bakterieller Zersetzung. So beträgt in der Regel die Stabilität des erfindungsgemäßen Schlickers wenigstens 12 Stunden, bevorzugt wenigstens 2 Tage.

Ein weiterer Gegenstand der Erfindung ist ein Verfahren zur Herstellung des erfindungsgemäßen Schlickers, bei dem man zu einer wässerigen Dispersion, die
a1) als Feststoff Aluminiumoxidpartikel mit einem mittleren Partikeldurchmesser von weniger als 300 nm und
a2) deren Gehalt an Aluminiumoxidpartikeln mehr als 15 Gew.-%, bevorzugt 25 bis 70 Gew.-%, besonders bevorzugt 35 bis 60 Gew.-%, beträgt und
a3) die einen pH-Wert von 5 bis 12, bevorzugt 7,5 bis 9, besonders bevorzugt 7,5 bis 8,5, aufweist
b) Feuerfestpartikel mit einer mittleren Partikelgröße von 0,5 µm bis 150 µm und
c) gegebenenfalls Additive gibt.

Das erfindungsgemäße Verfahren erlaubt aufgrund des hohen Feststoffgehaltes der Aluminiumoxidpartikel eine rasche Trocknung des Schlickers bei der Herstellung einer Gießform. Weiterhin erlaubt das erfindungsgemäße Verfahren eine rasche Herstellung des Schlickers, die unter niedrigen Scherbedingungen durchgeführt werden kann. So kann der erfindungsgemäße Schlicker in der Regel innerhalb von höchstens 12 Stunden, bevorzugt weniger als 5 Stunden hergestellt werden. Dies stellt eine deutliche Verbesserung gegenüber dem Stand der Technik dar, bei dem hierzu gewöhnlich wenigstens 1 Tag nötig ist.

Die Aluminiumoxidpartikel sind bevorzugt aggregierte Aluminiumoxidpartikel und besonders bevorzugt pyrogen hergestellte Aluminiumoxidpartikel. Weiterhin kann die eingesetzte Dispersion gepuffert sein. Hierzu kann ein Puffer, der ein oder mehrere mindestens zweibasische Carbonsäuren, beispielsweise Zitronensäure oder Weinsäure, sowie mindestens ein Salz eines Dialkalihydrogenphosphats und/oder Alkalihydrogenphosphats umfasst, wobei der Anteil der Pufferbestandteile, jeweils unabhängig voneinander, 0,3 bis 3 x 10⁻⁶ mol/m² spezifischer Aluminiumoxid-Oberfläche beträgt. Das Zetapotential der eingesetzten Dispersion ist bevorzugt niedriger als -15 mV. Besonders bevorzugt ist ein Zetapotential im Bereich von -25 bis -40 mV.
Das Zetapotential ist ein Maß für die Oberflächenladung der Partikel, welches durch Substanzen, die sich an der Oberfläche anlagern, beeinflusst werden kann. Unter Zetapotential ist das Potential an der Scherebene innerhalb der elektrochemischen Doppelschicht Aluminiumoxidpartikel/ Elektrolyt in der Dispersion zu verstehen. Das Zetapotential kann beispielsweise bestimmt werden durch Messung des kolloidalen Vibrationsstroms (CVI) der Dispersion oder durch Bestimmung der elektrophoretischen Mobilität.

Weiterhin können ein oder mehrere Additive eingesetzt werden. Diese umfassen Antischaummittel, Benetzungshilfen, Polymere, Polyphosphate, Organophosphonsäuren, metallorganische Verbindungen, hitzebeständige Fasern und antibakteriell wirkende Mittel. Beispiele dieser Additive sind bereits bei den Bestandteilen des erfindungsgemäßen Schlickers genannt. Antischaummittel, Benetzungshilfen, Polyphosphate, Organophosphonsäuren, metallorganische Verbindungen und antibakteriell wirkende Mittel werden bevorzugt in Anteilen von 0,01 bis 5 Gew.-% und besonders bevorzugt in Anteilen von 0,1 bis 1 Gew.-%, jeweils bezogen auf den Schlicker, eingesetzt. In einer besonders bevorzugten Ausführungsform werden 0,05 bis 2 Gew.-% Natriumtripolyphosphat eingesetzt. Das Polymer kann bevorzugt in einem Anteil von 1 bis 5 Gew.-%, bezogen auf den Schlicker, eingesetzt werden.

Geeignete hitzebeständige Fasern können beispielsweise Aramid-, Kohlenstoff-, Metall-, Keramik-, Nitrid-, Carbid-, Glas, Polymer- oder Zellulosefasern sein.

In einer besonderen Ausführungsform des Verfahrens sind einzelne oder alle Additive Bestandteil der Dispersion.

Ein weiterer Gegenstand der Erfindung ist eine wässrige Dispersion von Aluminiumoxidpartikeln, bei der
a) die Aluminiumoxidpartikel einen mittleren Partikeldurchmesser von weniger als 300 nm aufweisen,
b) der Gehalt an Aluminiumoxidpartikeln mehr als 15 Gew.-%, bevorzugt 25 bis 70 Gew.-%, besonders bevorzugt 35 bis 60 Gew.-% beträgt,
c) die Dispersion weiterhin ein oder mehrere Additive ausgewählt aus der Gruppe bestehend aus Antischaummitteln, Benetzungshilfen, Polymere, Polyphosphaten, metallorganischen Verbindungen und antibakteriell wirkenden Mittel enthält, und
d) die Dispersion ein Puffersystem enthält und einen pH-Wert von 5 bis 12, bevorzugt 7,5 bis 9, besonders bevorzugt 7,5 bis 8,5 aufweist.

Ein geeignetes Puffersystem enthält beispielsweise ein oder mehrere mindestens zweibasische Carbonsäuren sowie mindestens ein Salz eines Dialkalihydrogenphosphats und/oder Alkalihydrogenphosphats enthält, wobei der Anteil, jeweils unabhängig voneinander, 0,3 bis 3 x 10⁻⁶ mol/m² spezifischer Aluminiumoxid-Oberfläche beträgt.

Das Zetapotential der erfindungsgemäßen Dispersion beträgt bevorzugt weniger als -15 mV. In einer besonders bevorzugten Ausführungsform beträgt das Zetapotential -25 bis -40 mV.

Beispiele von Additiven sind bereits bei den Bestandteilen des erfindungsgemäßen Schlickers genannt.

Die erfindungsgemäße Dispersion weist insbesondere eine gute Verträglichkeit mit Polymeren auf.

Ein weiterer Gegenstand der Erfindung ist ein Verfahren zur Herstellung einer Gießform, insbesondere für den Präzisionsguss, mit den Schritten
a) Eintauchen eines vorgeformten ausschmelzbaren Modells in den erfindungsgemäßen Schlicker,
b) Beschichtung der mit dem Schlicker bedeckten Oberfläche des Modells durch Besanden mit groben Feuerfestpartikeln mit einer mittleren Partikelgröße von mehr als 50 bis 1000 µm, bevorzugt 100 µm bis 400 µm, und
c) Trocknen der beschichteten Oberfläche,
wobei die Schritte a) bis c) beliebig oft bis zum Erreichen der für die Gießform erforderlichen Anzahl von Beschichtungslagen wiederholt werden.

Die zum Besanden der mit dem Schlicker bedeckten Oberfläche eingesetzten groben Feuerfestpartikel mit einer mittleren Partikelgröße von mehr als 50 µm bis 1000 µm werden vorzugsweise ebenfalls ausgewählt aus der Gruppe Aluminiumoxid, Zirkonoxid, Mullit, Andalusit, Zirkonmullit, stabilisiertes Zirkonoxid, Yttriumoxid und/oder Seltenerdoxide.

Bei einer besonders bevorzugten Ausgestaltung des erfindungsgemäßen Verfahrens werden als Feuerfestpartikel mit einer mittleren Partikelgröße von 5 µm bis 40 µm, wie auch als grobe Feuerfestpartikel mit einer mittleren Partikelgröße von mehr als 100 µm bis 200 µm Aluminiumoxidpartikel eingesetzt.

In der Regel umfasst das erfindungsgemäße Verfahren nach dem letzten Trocknungsschritt das Wachsausschmelzen und eine Sinterung. Hierdurch wird eine ausreichende Festigkeit der erhaltenen Gießform für ihren späteren Einsatz erreicht. Es besteht jedoch auch die Möglichkeit, das Verfahren ohne zusätzlichen Sinterschritt durchzuführen und die erhaltene Gießform während des Präzisionsgusses "in situ" zu verfestigen.

Mit dem Einsatz des erfindungsgemäßen Schlickers lassen sich sehr konstante Trocknungsraten realisieren. Das heißt, dass das Trocknen der Gießform sehr schonend erfolgt, so dass die Gießform keinen Schaden nimmt.

Ein weiterer Gegenstand der Erfindung ist eine Gießform, insbesondere für den Präzisionsguss, die erhältlich ist nach diesem Verfahren.

Die vorliegende Erfindung umfasst drei Arten von Partikeln, nämlich Feuerfestpartikel mit einer mittleren Partikelgröße von 0,5 bis 150 µm, grobe Feuerfestpartikel mit einer mittleren Partikelgröße von >50 bis 1000 µm, sowie Aluminiumoxidpartikel mit einem mittleren Partikeldurchmesser von weniger als 300 nm.

Die Gießform enthält bevorzugt mindestens 98 Gew.-%, bezogen auf den Veraschungsrückstand, Aluminiumoxid.

Weiterhin kann eine Gießform vorteilhaft sein, die im Wesentlichen frei von Siliciumdioxid ist. Hierunter ist zu verstehen, dass der Anteil an Siliciumdioxid nicht mehr als 2 Gew.-%, bevorzugt nicht mehr als 0,5 Gew.-% und besonders bevorzugt nicht mehr als 0,1 Gew.-% beträgt.

Weiterhin kann eine Gießform vorteilhaft sein, deren Aluminiumoxidpartikel mit einem mittleren Partikeldurchmesser von weniger 300 nm pyrogen hergestellte Aluminiumoxidpartikel sind.

Die für eine erfindungsgemäße Gießform, die im wesentlichen aus Aluminiumoxid besteht, d.h. zu wenigstens aus 98 Gew.-%, liegen üblicherweise die erforderlichen Sintertemperaturen bei ca. 900 - 1400°C, bevorzugt bei ca. 1350°C, und es können nach einer Sinterzeit von ca. 3 Stunden mechanische Eigenschaften für die Gießform erreicht werden, die vergleichbar sind mit denen einer konventionell auf Basis von siliciumdioxidhaltigen Bindern hergestellten Gießform. Die erfindungsgemäße Gießform hat gegenüber diesen jedoch den Vorteil hat, chemisch weitgehend inert zu sein und daher für nahezu alle Superlegierungen eingesetzt werden zu können.

### Beispiele

### Herstellung der Dispersion 1:

In einem 60 1 Edelstahl-Ansatzbehälter wird VE-Wasser vorgelegt. Anschließend werden mit Hilfe des Saugrüssels der Ystral Conti-TDS 3 (Statorschlitze: 4 mm Kranz und 1 mm Kranz, Rotor/Stator-Abstand ca. 1 mm) unter Scherbedingungen Aluminiumoxidpulver (1) eingesaugt.
Weiterhin wird eine Pufferlösung aus wasserfreier Zitronensäure, Di-Natriumhydrogen-phosphat-dihydrat und Wasser zugesetzt und weiteres Aluminiumoxidpulver (2) eingesaugt. Nach Beendigung des Einziehens wird der Einsaugstutzen geschlossen und noch bei 3000 U/min 10 min lang nachgeschert. Nach erfolgter Vermahlung wird ein Konservierungsmittel zugegeben.
Diese Vordispersion wird in zwei Durchgängen durch die Hochenergiemühle Sugino Ultimaizer HJP-25050 bei einem Druck von 2500 bar und Diamantdüsen von 0,3 mm Durchmesser geführt und dadurch intensiv weiter vermahlen.

**Tabelle 1: Dispersion 1**

| **Dispersion** | | **1** |
|---|---|---|
| VE-Wasser | kg | 41,1 |
| Al₂O₃-Pulver | | AEROXIDE® Alu C* |
| (1) | kg | 5,8 |
| (2) | kg | 28, 2 |
| Pufferlösung | | |
| Zitronensäure | kg | 1,70 |
| Na₂HPO₄-dihydrat | kg | 1,42 |
| Wasser | kg | 6,70 |
| Konservierungsmittel | | Acticide® MV** |
| | g | 77 |
| pH-Wert nach 48h | | 7,5 |
| Feststoffgehalt | Gew.-% | 40 |
| mittl. Partikeldurchmesser | nm | 86 |

| | | |
|---|---|---|
| *Fa. Evonik Degussa GmbH; **Fa. THOR, | | |

### Herstellung des Schlickers

Schlicker 2a: Zur Schlickerherstellung werden 3 kg aus Beispiel 1 vorgelegt und portionsweise mit insgesamt 7 kg E-lektroschmelzkorund (Aluminiumoxid Weiß WRG, Treibacher Schleifmittel) in der Absiebung 0 bis 325 mesh versetzt. Anschließend werden 0,075 Gew.-% eines Benetzungsmittels auf Alkoholalkoxylatbasis (TEGO SURTEN W 111, EVONIK Industries) sowie 0,02 Gew.-% eines Antischaummittels (Burst 100, Firma REMET) zugegeben.

Die so erhaltene Mischung wird bei einer geringen Scherrate gerührt bis die Viskosität bei der Messung mit Hilfe eines Auslaufbechers "Zahn4" einen Wert von 18 bis 23 Sekunden erreicht hatte.

Bei dieser Art von Viskositätsmessung wird die zu messende Flüssigkeit bis zu einer bestimmten Füllhöhe in einen horizontal ausgerichteten, sogenannten Viskositätsbecher gefüllt, der auf seiner Unterseite eine Auslaufdüse besitzt, die nach dem Einfüllen der Flüssigkeit zunächst beispielsweise mit einer Glasplatte verschlossen ist. Die Zeitmessung beginnt, sobald die Auslaufdüse durch das Wegziehen der Glasplatte freigegeben ist. Gemessen wird die kinematische Viskosität über die Zeit bis zum erstmaligen Abreißen des Auslaufstroms in Sekunden und kann dann in Centistokes (cST) umgerechnet werden. Bei derartigen Viskositätsmessungen können je nach Messbereich oder Messmethode unterschiedliche Bechertypen eingesetzt werden. Im vorliegenden Fall wurde ein ELCOMETER® 2210 Zahn Auslaufbecher mit der Düsengröße 4 eingesetzt. Die Stabilisierung der Viskosität erfolgte über gezielte Zugabe von Dispersion, Wasser oder Feuerfestpartikeln.

Der so hergestellte Schlicker kann auf die übliche Weise zur Herstellung von Gießformen eingesetzt werden.

Schlicker 2b: Analog Schlicker 2a, jedoch mit Zugabe von 0,1 Gew.-% Natriumtripolyphosphat.

Schlicker 2c: Analog Schlicker 2b, jedoch mit 0,43 Gew.-% Natriumtripolyphosphat variiert.

### Herstellung der Gießform

Gießform 3a: Zur Herstellung der Gießform wird ein mit einem Haltegriff versehenes Wachsmodell mit den Abmessungen 50 mm x 80 mm x 3 mm auf Basis von RW 161 (Fa. REMET) eingesetzt, das in einem ersten Beschichtungsschritt in den Schlicker aus Beispiel 2a für 8 Sekunden eingetaucht wird, wobei der Haltegriff nicht vollständig mit Schlicker bedeckt wird, um ein späteres Ausschmelzen des Wachses zu ermöglichen. Das so mit Schlicker beschichtete Modell wird für ca. 18 Sekunden abtropfen gelassen und dann so lange einem Sandstrom von aus einer Höhe von ca. 30 cm herunterfallenden groben Feuerfestpartikeln von Aluminiumoxid ALODUR® ZWSK 90 (Treibacher Schleifmittel) ausgesetzt, bis keine Partikel mehr an der Oberfläche haften blieben.
Die anschließende Trocknung erfolgt für 12 Stunden bei Zimmertemperatur und einer Luftfeuchtigkeit von 30 - 60%. Das Eintauchen des Modells in den Schlicker wird dann wiederholt und das mit Schlicker beschichtete Modell wird unter den gleichen Bedingungen mit etwas gröberen Feuerfestpartikeln (Aluminiumoxid ALODUR® ZWSK 60, Treibacher Schleifmittel) besandet. Die anschließende Trocknung bei Zimmertemperatur und einer Luftfeuchtigkeit von 30 - 60 % wird auf 3 Stunden verkürzt.

Nach dieser Zwischenschicht werden noch zwei weitere Stützschichten aufgetragen, wobei noch gröbere Feuerfestpartikel eingesetzt werden (Aluminiumoxid ALODUR® ZWSK 30, Treibacher Schleifmittel). Die Trocknung der Stützschichten erfolgt innerhalb von 3 Stunden. Anschließend wird die Abschlussschicht durch einfaches Eintauchen des Modells in den Schlicker ohne weiteres Besanden mit groben Feuerfestpartikeln aufgetragen.

Auf diese Weise wird eine Gießform mit einer Schichtdicke von 3,7 - 4,2 mm erhalten, deren Wachskern in einem Ofen bei 100°C ausgeschmolzen wird.

Gießform 3b: analog Beispiel 3a, jedoch unter Verwendung des Schlickers 2b.

Gießform 3c: analog Beispiel 3a, jedoch unter Verwendung des Schlickers 2c.

### Vergleichsbeispiel

Schlicker (4ba) für die Primärschicht: Zur Herstellung eines Schlickers für die Primärschicht werden 18 Gew.-% eines kommerziell erhältlichen fertigen Binders mit 82 Gew.-% Zirkonsand (ZrSiO₄) in der Absiebung 0-325 mesh versetzt. Als Binder wird REMASOL® ABOND® (Fa. REMET) eingesetzt, der im Wesentlichen zu ca. 30 Gew.-% aus kolloidaler Kieselsäure und zu ca. 70 Gew.-% aus Wasser besteht.

Schlicker (4bb) für die Zwischen- und Stützschichten: Zur Herstellung des Schlickers werden 18 Gew.-% eines kommerziell erhältlichen fertigen Binders auf Basis von kolloidaler Kieselsäure (REMASOL® SP-ULTRA 2408, Fa. REMET) mit 82 Gew.-% Molochit (Aluminiumsilikat) in der Absiebung 200 mesh versetzt. Der Binder besteht zu 34 Gew.-% aus kolloidaler Kieselsäure und zu 66 Gew.-% aus Wasser.

Gießform 4a: In beiden oben genannten Fällen wird die Menge der groben Feuerfestpartikel zunächst portioniert und dann portionsweise zugegeben, wobei die Viskosität des Schlickers 4ba für die Primärbeschichtung auf 18 bis 24 Sekunden (gemessen ELCOMETER® 2210 Zahn 4 Auslaufbecher) eingestellt wurde, während die Viskosität des Schlickers 4bb für die Zwischen- und Stützschichten auf 8 - 10 Sekunden eingestellt wurde.

Die während der Viskositätseinstellung verdampfte Flüssigkeitsmenge wird durch Zugabe von Wasser wieder ersetzt. Der pH-Wert beträgt 8 - 10,5.

Die Gießform wird analog zur Gießform 3a hergestellt, wobei ein äquivalentes Modell zunächst für 8 Sekunden in den Schlicker für die Primärschicht eingetaucht wird und anschließend nach dem Abtropfen mit Zirkonsand als Feuerfestpartikel in der Korngröße 100 - 200 µm besandet wird. Für die Zwischenschicht werden als grobe Feuerfestpartikel Molochit 30 - 80 mesh eingesetzt, während für die beiden Stützschichten Molochit 16 - 30 mesh eingesetzt wird. Die Abschlussschicht wurde mit dem Schlicker 4bb ohne zusätzliches Besanden ausgebildet.

Auch hier betrug die Schichtdicke 3,7 - 4,2 mm. Der Wachskern wird bei 100°C im Ofen ausgeschmolzen.

Gesinterte Gießformen: Die Gießformen 3a, 3b, 3c und 4a werden bei unterschiedlichen Temperaturen unter Bildung der Gießformen 3aa, 3ba, 3ca und 4aa getrocknet bzw. gesintert und dann sowohl auf ihre mechanische Festigkeit als auch in Bezug auf ihre Gaspermeabilität getestet. Die entsprechenden Testergebnisse sind in den Tabellen 2 und 3 zusammengefasst.

**Tabelle 2: Kaltbiegefestigkeit (CMOR*) der Gießformen**

| Gießform | CMOR [N/mm²] | | |
|---|---|---|---|
| | 120 °C | 1100 °C | 1350 °C |
| 3aa | 2,3 | 0,8 | 4,7 |
| 3ba | 4,5 | 3,4 | 10,1 |
| 3ca | 10,0 | 7,8 | 19,2 |
| 4aa** | 2,3 | 7,2 | 14,0 |

| | | | |
|---|---|---|---|
| * CMOR = Cold Modulus Of Rupture; **Vergleich | | | |

**Tabelle 3: Gaspermeabilität der GieBformen 3aa und 4aa**

| Temperatur [°C] | Gaspermeabilität [L/min] | |
|---|---|---|
| | 3aa | 4aa* |
| 950 | 0,22 | 0,28 |
| 1000 | 0,23 | 0,29 |
| 1050 | 0,36 | 0,42 |
| 1100 | 0,55 | 0,50 |
| 1150 | 0,74 | 0,78 |

| | | |
|---|---|---|
| *Vergleich | | |

Die Festigkeit wird mit Hilfe von Prüfkörpern, die bei 120°C getrocknet bzw. bei 1100°C oder 1350°C gesintert werden, im Dreipunkt-Biegetest bestimmt. Das 0,43 Gew.-% Natriumtripolyphosphat enthaltende Muster zeigt von allen Mustern bei sämtlichen Behandlungstemperaturen die höchsten Festigkeitswerte.
Hierzu ist allerdings anzumerken, dass die Festigkeit nicht das einzige Kriterium für die Eignung einer Gießform für den Präzisionsguss ist. Hohe Festigkeiten garantieren zwar die Haltbarkeit der Form während des Gießens, was unabdingbare Voraussetzung für den Einsatz der Gießform ist, gleichzeitig wird jedoch durch zu hohe Festigkeiten das anschließende Entfernen der Form erschwert.

Als Orientierung für die für das Präzisionsgießen erforderliche Festigkeit kann das Vergleichsmuster 4aa herangezogen werden, das eine ausreichende Festigkeit aufweist.

Zusammenfassend kann festgehalten werden, dass es durch gezielte Temperaturbehandlung und gegebenenfalls Zugabe von Additiven, wie beispielsweise Natriumtripolyphosphat, mit dem erfindungsgemäßen Verfahren gelingt, eine ausreichend feste Gießform für den Präzisionsguss zu erhalten, die nahezu frei von Siliciumdioxid ist.

Gegenüber dem in US 4,247,333 offenbarten Verfahren erlaubt die vorliegende Erfindung eine weniger zeitaufwendige und kostengünstigere Herstellung einer Gießform aus Aluminiumoxid.

Gegenüber dem in US 5,297,615 eingesetzten Schlicker, weist der erfindungsgemäße Schlicker eine hohe Stabilität auf.

Aus den in der Tabelle 3 aufgeführten Ergebnissen, die auf Messungen in Analogie zum British Standard (BS 1902; Section 10.2; 1994) beruhen, ergibt sich, dass auch in Bezug auf die Gaspermeabilität Durchlässigkeitswerte erreicht werden, die mit denen von Standardmaterialien für Gießformen übereinstimmen.

### Beispiel 5: Trocknungsrate

In Tabelle 4 ist der Trocknungsverlauf eines Top Coats (d.h. erste Schicht auf der Wachsform)für den erfindungsgemäßen Schlicker 2b und den Vergleichsscklicker 4ba dargestellt. Der Trocknungsverlauf beschreibt die prozentuale Gewichtsabnahme der feuchten Schicht bei einer Temperatur von 25°C und einer relativen Luftfeuchte von 75%.

**Tabelle 4: Trocknungsrate (in Gew.-%)**

| **Zeit [min]** | **Schlicker 4ba** | **Schlicker 2b** |
|---|---|---|
| 5 | 100 | 100 |
| 15 | 98,1 | 99,3 |
| 25 | 97,1 | 98,5 |
| 35 | 96,5 | 97,8 |
| 50 | 96,2 | 97,2 |
| 65 | 96,0 | 96,9 |
| 95 | 95,8 | 96,3 |
| 125 | 95,7 | 95,9 |
| 155 | 95,6 | 95,7 |
| 185 | 95,5 | 95,6 |
| 215 | 95,4 | 95,5 |

Aus Tabelle 4 wird deutlich, dass die Gewichtsabnahme der Schicht aus dem Schlicker 4ba in den ersten 100 Minuten sehr schnell verläuft (d.h. mit hohen Trocknungsraten) aber sich dann an die des erfindungsgemäßen Schlicker 2b annähert. Ein sehr schneller Trocknungsverlauf in den ersten Minuten ist unerwünscht, da hierbei eine massive Wärmeabsorption und eine Schrumpfung des Wachsprofiles stattfindet und dadurch die Gießform beschädiget wird. Aus diesem Grund kann davon ausgegangen werden, dass die Trocknung der Schicht aus Schlicker 2b, die in den ersten Minuten mit deutlich geringerem Gewichtsverlust erfolgt, wesentlich schonender ist und somit eine defektärmere Gießform erhalten wird.

## Patentansprüche

1. Schlicker, **dadurch gekennzeichnet, dass** er
a) 50 bis 80 Gew.-%, bevorzugt 60 bis 75 Gew.-%, Feuerfestpartikel mit einer mittleren Partikelgröße von 0,5 µm bis 150 µm,
b) 5 bis 35 Gew.-% Aluminiumoxidpartikeln mit einem mittleren Partikeldurchmesser von weniger 300 nm,
c) 5 bis 35 Gew.-% Wasser enthält und,
d) einen pH-Wert von 5 bis 12 aufweist.

2. Schlicker nach Anspruch 1, **dadurch gekennzeichnet, dass** die Aluminiumoxidpartikel aggregiert sind.

3. Schlicker nach den Ansprüchen 1 oder 2, **dadurch gekennzeichnet, dass** die Aluminiumoxidpartikel pyrogen hergestellte Aluminiumoxidpartikel sind.

4. Schlicker nach den Ansprüchen 1 bis 3, **dadurch gekennzeichnet, dass** er gepuffert ist.

5. Schlicker nach den Ansprüchen 1 bis 4, **dadurch gekennzeichnet, dass** er zusätzlich, an zusätzlichen Additiven, ausgewählt aus der Gruppe Antischaummittel, Benetzungshilfen, Polymere, Polyphosphate, Organophosphonsäuren, metallorganische Verbindungen und/oder antibakteriell wirkende Mittel enthält.

6. Schlicker nach den Ansprüchen 1 bis 5, **dadurch gekennzeichnet, dass** die Feuerfestpartikel mit einer mittleren Partikelgröße von 0,5 µm bis 150 µm ausgewählt sind aus der Gruppe bestehend aus Aluminiumoxid, Zirkonoxid, Mullit, Andalusit, Zirkonmullit, stabilisiertes Zirkonoxid, Yttriumoxid, Cobaltaluminiumspinell, Cobaltoxid und/oder Selten-Erd-Oxide.

7. Verfahren zur Herstellung des Schlickers gemäß der Ansprüche 1 bis 6, **dadurch gekennzeichnet, dass** man zu einer wässerigen Dispersion, die
a1) als Feststoff Aluminiumoxidpartikel mit einem mittleren Partikeldurchmesser von weniger als 300 nm und
a2) deren Gehalt an Aluminiumoxidpartikeln mehr als 15 Gew.-% beträgt und
a3) die einen pH-Wert von 5 bis 12 aufweist,
b) Feuerfestpartikel mit einer mittleren Partikelgröße von 0,5 µm und 150 µm und
c) gegebenenfalls Additive gibt.

8. Wässrige Dispersion von Aluminiumoxidpartikeln, **dadurch gekennzeichnet, dass**
a) die Aluminiumoxidpartikel einen mittleren Partikeldurchmesser von weniger als 300 nm aufweisen,
b) der Gehalt an Aluminiumoxidpartikeln mehr als 15 Gew.-% beträgt,
c) die Dispersion weiterhin ein oder mehrere Additive ausgewählt aus der Gruppe bestehend aus Antischaummitteln, Benetzungshilfen, Polymeren, Polyphosphaten, Organophosphonsäuren, metallorganischen Verbindungen und antibakteriell wirkenden Mittel enthält, und
d) die Dispersion ein Puffersystem enthält und einen pH-Wert von 5 bis 12 aufweist.

9. Wässerige Dispersion nach Anspruch 8, **dadurch gekennzeichnet, dass** sie 0,05 bis 2,0 Gew.-% Natriumtripolyphosphat, bezogen auf die Dispersion, enthält.

10. Verfahren zur Herstellung einer Gießform mit den Schritten
a) Eintauchen eines vorgeformten ausschmelzbaren Modells in den Schlicker gemäß der Ansprüche 1 bis 6,
b) Beschichtung der mit dem Schlicker bedeckten Oberfläche des Modells durch Besanden mit groben Feuerfestpartikeln mit einer mittleren Partikelgröße von mehr als 50 µm bis 1000 µm und
c) Trocknen der beschichteten Oberfläche,
wobei die Schritte a) bis c) beliebig oft bis zum Erreichen der für die Gießform erforderlichen Anzahl von Beschichtungslagen wiederholt werden.

11. Verfahren nach Anspruch 10, **dadurch gekennzeichnet, dass** die groben Feuerfestpartikel mit einer mittleren Partikelgröße von mehr als 50 µm bis 1000 µm ausgewählt sind aus der Gruppe bestehend aus Aluminiumoxid, Zirkonoxid, Mullit, Andalusit, Zirkonmullit, stabilisiertes Zirkonoxid, Yttriumoxid, Cobaltaluminiumspinell, Cobaltoxid und/oder Selten-Erd-Oxide.

12. Gießform, hergestellt nach einem Verfahren gemäß der Ansprüche 10 oder 11.

13. Gießform nach Anspruch 12, **dadurch gekennzeichnet, dass** sie mehr als 98 Gew.-% Aluminiumoxid enthält.

14. Gießform nach den Ansprüchen 12 oder 13, **dadurch gekennzeichnet, dass** sie im Wesentlichen frei von Siliciumdioxid ist.

15. Gießform nach den Ansprüchen 12 bis 14, **dadurch gekennzeichnet, dass** Aluminiumoxidpartikel mit einem mittleren Partikeldurchmesser von weniger 300 nm pyrogener Herkunft sind.

## Claims

1. Slip, **characterized in that** it contains
a) from 50 to 80% by weight, preferably from 60 to 75% by weight, of refractory particles having an average particle size of from 0.5 µm to 150 µm,
b)from 5 to 35% by weight of aluminium oxide particles having an average particle diameter of less than 300 nm,
c) from 5 to 35% by weight of water and has
d) a pH of from 5 to 12.

2. Slip according to Claim 1, **characterized in that** the aluminium oxide particles are aggregated.

3. Slip according to Claim 1 or 2, **characterized in that** the aluminium oxide particles are pyrogenic aluminium oxide particles.

4. Slip according to any of Claims 1 to 3, **characterized in that** it is buffered.

5. Slip according to any of Claims 1 to 4, **characterized in that** it additionally contains additional additives selected from the group consisting of antifoams, wetting agents, polymers, polyphosphates, organophosphonic acids, metal-organic compounds and antibacterial agents.

6. Slip according to any of Claims 1 to 5, **characterized in that** the refractory particles having an average particle size of from 0.5 µm to 150 µm are selected from the group consisting of aluminium oxide, zirconium oxide, mullite, andalusite, zirconium mullite, stabilized zirconium oxide, yttrium oxide, cobalt-aluminium spinel, cobalt oxide and rare earth oxides.

7. Process for producing the slip according to any of Claims 1 to 6, **characterized in that** an aqueous dispersion which contains
a1) aluminium oxide particles having an average particle diameter of less than 300 nm as solid and
a2) has a content of aluminium oxide particles of more than 15% by weight and has
a3) a pH of from 5 to 12, is admixed with
b) refractory particles having an average particle size of from 0.5 µm to 150 µm and
c) if appropriate, additives.

8. Aqueous dispersion of aluminium oxide particles, **characterized in that**
a) the aluminium oxide particles have an average particle diameter of less than 300 nm,
b) the content of aluminium oxide particles is more than 15% by weight,
c) the dispersion additionally contains one or more additives selected from the group consisting of antifoams, wetting agents, polymers, polyphosphates, organophosphonic acids, metal-organic compounds and antibacterial agents and
d) the dispersion contains a buffer system and has a pH of from 5 to 12.

9. Aqueous dispersion according to Claim 8, **characterized in that** it contains from 0.05 to 2.0% by weight of sodium tripolyphosphate, based on the dispersion.

10. Process for producing a casting mould, which comprises the steps
a) dipping of a preshaped meltable model into the slip according to any of Claims 1 to 6,
b) coating of the surface of the model which is covered with the slip by sanding with coarse refractory particles having an average particle size of from > 50 µm to 1000 µm and
c) drying of the coated surface,
where the steps a) to c) are repeated as often as desired until the number of coating layers required for the casting mould has been reached.

11. Process according to Claim 10, **characterized in that** the coarse refractory particles having an average particle size of from > 50 µm to 1000 µm are selected from the group consisting of aluminium oxide, zirconium oxide, mullite, andalusite, zirconium mullite, stabilized zirconium oxide, yttrium oxide, cobalt-aluminium spinel, cobalt oxide and rare earth oxides.

12. Casting mould produced by a process according to Claim 10 or 11.

13. Casting mould according to Claim 12, **characterized in that** it contains more than 98% by weight of aluminium oxide.

14. Casting mould according to Claim 12 or 13, **characterized in that** it is essentially free of silicon dioxide.

15. Casting mould according to any of Claims 12 to 14, **characterized in that** aluminium oxide particles having an average particle diameter of less than 300 nm are of pyrogenic origin.

## Revendications

1. Barbotine, **caractérisée en ce qu'**elle comporte
a) 50 à 80 % en poids, de préférence 60 à 75 % en poids, de particules réfractaires ayant un diamètre moyen de particule de 0,5 µm à 150 µm,
b) 5 à 35 % en poids de particules d'oxyde d'aluminium ayant un diamètre moyen de particule de moins de 300 nm,
c) 5 à 35 % en poids d'eau et
d) présente un pH de 5 à 12.

2. Barbotine selon la revendication 1, **caractérisée en ce que** les particules d'oxyde d'aluminium sont agrégées.

3. Barbotine selon la revendication 1 ou 2, **caractérisée en ce que** les particules d'oxyde d'aluminium sont des particules d'oxyde d'aluminium produites par pyrogénation.

4. Barbotine selon les revendications 1 à 3, **caractérisée en ce qu'**elle est tamponnée.

5. Barbotine selon les revendications 1 à 4, **caractérisée en ce qu'**elle contient en outre des additifs supplémentaires, choisis dans le groupe des antimousses, adjuvants de mouillage, polymères, polyphosphates, acides organophosphoniques, composés organométalliques et/ou agents à action antibactérienne.

6. Barbotine selon les revendications 1 à 5, **caractérisée en ce que** les particules réfractaires ayant une taille moyenne de particule de 0,5 µm à 150 µm sont choisies dans le groupe constitué par l'oxyde d'aluminium, l'oxyde de zirconium, la mullite, l'andalousite, la mullite-zircone, l'oxyde de zirconium stabilisé, l'oxyde d'yttrium, le spinelle à aluminium-cobalt, l'oxyde de cobalt et/ou des oxydes de terres rares.

7. Procédé pour la préparation de la barbotine selon les revendications 1 à 6, **caractérisé en ce qu'**on ajoute à une dispersion aqueuse qui comporte
a1) en tant que matière solide des particules d'oxyde d'aluminium ayant un diamètre moyen de particule de moins de 300 nm et
a2) dont la teneur en particules d'oxyde d'aluminium est de plus de 15 % en poids et
a3) qui présente un pH de 5 à 12,
b) des particules réfractaires ayant une taille moyenne de particule de 0,5 µm à 150 µm et
c) éventuellement des additifs.

8. Dispersion aqueuse de particules d'oxyde d'aluminium, **caractérisée en ce que**
a) les particules d'oxyde d'aluminium ont un diamètre moyen de particule de moins de 300 nm,
b) la teneur en particules d'oxyde d'aluminium est de plus de 15 % en poids,
c) la dispersion en outre contient un ou plusieurs additifs choisis dans le groupe des antimousses, adjuvants de mouillage, polymères, polyphosphates, acides organophosphoniques, composés organométalliques et agents à action antibactérienne, et
d) la dispersion contient un système tampon et présente un pH de 5 à 12.

9. Dispersion aqueuse selon la revendication 8, **caractérisée en ce qu'**elle contient de 0,05 à 2,0 % en poids de tripolyphosphate de sodium, par rapport à la dispersion.

10. Procédé pour la fabrication d'un moule, comportant les étapes
a) immersion d'un modèle fusible préformé dans la barbotine selon les revendications 1 à 6,
b) revêtement de la surface du modèle, couverte avec la barbotine, par sablage avec des particules réfractaires grossières ayant une taille moyenne de particule de plus de 50 µm à 1 000 µm et
c) séchage de la surface revêtue.
les étapes a) à c) étant souvent répétées à volonté jusqu'à l'obtention du nombre de couches de revêtement requis pour le moule.

11. Procédé selon la revendication 10, **caractérisé en ce que** les particules réfractaires grossières ayant une taille moyenne de particules de plus de 50 µm à 1 000 µm sont choisies dans le groupe constitué par l'oxyde d'aluminium, l'oxyde de zirconium, la mullite, l'andalousite, la mullite-zircone, l'oxyde de zirconium stabilisé, l'oxyde d'yttrium, le spinelle à aluminium-cobalt, l'oxyde de cobalt et/ou des oxydes de terres rares.

12. Moule, fabriqué conformément à un procédé selon la revendication 10 ou 11.

13. Moule selon la revendication 12, **caractérisé en ce que** qu'il contient plus de 98 % en poids d'oxyde d'aluminium.

14. Moule selon la revendication 12 ou 13, **caractérisé en ce qu'**il est pratiquement exempt de dioxyde de silicium.

15. Moule selon les revendications 12 à 14, **caractérisé en ce que** les particules d'oxyde d'aluminium ayant un diamètre moyen de particule de moins de 300 nm sont d'origine pyrogénée.
